# EUROPÄISCHE PATENTSCHRIFT

(11) **EP 2 530 695 B1**
(45) Veröffentlichungstag und Bekanntmachung des Hinweises auf die Patenterteilung: **09.09.2015**
(21) Anmeldenummer: 12003608.2
(22) Anmeldetag: 09.05.2012
(51) Int. Cl.: H01H 19/14, H01H 25/06, H04L 12/28, H05B 33/08

(54) **Multifunktions-Bediengerät mit Drehknopf und Funktionssymbolen**
Multifunctional operating device with rotating button and function symbols
Appareil de commande multifonction avec bouton tournant et symboles de fonction

(30) Priorität: 28.05.2011 DE 102011102775
(43) Veröffentlichungstag der Anmeldung: 05.12.2012
(73) Patentinhaber: ABB AG, 68309 Mannheim (DE)
(72) Erfinder: Sahlmann, Hans-Peter, 58454 Witten (DE); Schulte-Lippern, Günter, 58513 Lüdenscheid (DE)

(56) Entgegenhaltungen:
- EP-B1- 1 956 754
- WO-A1-97/06542
- DE-A1- 3 836 625
- DE-B3-102006 016 393
- DE-B3-102006 024 994
- DE-U1-202008 010 525
- US-A1- 2005 087 702

## Beschreibung

Die Erfindung betrifft ein Multifunktions-Bediengerät in Form eines in eine normgerechte UP-Gerätedose montierbaren Unterputz-Installationsgerätes mit Zentralscheibe, Gerätesockel und Abdeckrahmen,
- mit einem Drehknopf als erstem Bedienelement,
- mit einer Vielzahl von durch Drehung des Drehknopfes anwählbaren Funktionssymbolen, wobei jedes Funktionssymbol einem anzusteuernden Gerät zugeordnet ist,
- mit einem einen Mikrotaster betätigenden Tastknopf als zweitem Bedienelement,
- mit einem Busankoppler, welcher mit einem Bus der Gebäudesystemtechnik verbunden ist, an dem die ansteuerbaren Geräte angeschlossen sind.

Eine bevorzugte Anwendung besteht in der Steuerung von Funktionen in einem Gebäude, wie Schalten, Dimmen, Jalousiesteuerung, Steuerung von Heizungsfunktionen und Lichtszenensteuerung.

Aus der EP 1 956 754 B1 ist ein Bediengerät der Gebäudesystemtechnik mit mindestens einem Bedienelement bekannt, welchem wahlweise unterschiedliche Funktionen zuordenbar sind und welches eine dem Bedienelement zugeordnete LED-Leuchtanzeige aufweist, wobei die LED-Leuchtanzeige mittels einer LED-Ansteuereinheit in Abhängigkeit der dem Bedienelement konkret zugeordneten Funktion in der Weise ansteuerbar ist, dass einer bestimmten Funktion eine bestimmte Farbe der LED-Leuchtanzeige zugeordnet ist. Zusätzlich ist ein Farbdisplay mit unterschiedlichen, den einzelnen Funktionen zugeordneten und in Abhängigkeit der konkret ausgewählten Funktion aktivierten oder desaktivierten Bildschirm-Symbolen vorgesehen, welchem jeweils eine mittels einer Farbdisplay-Ansteuereinheit ansteuerbaren Farbdisplay-Leuchtanzeige zugeordnet ist, deren Farbe der Farbe der LED-Leuchtanzeige entspricht. Vorteilhaft erkennt der Anwender bereits bei Betrachtung des Bediengerätes aus größerer Entfernung, welche Funktion über das Bediengerät konkret aufgerufen werden kann.

Aus der DE 10 2006 016 393 B3 ist ein in eine normgerechte UP-Gerätedose montierbares elektrisches Installationsgerät mit einer Zentralscheibe, einem Gerätesockel, einem Abdeckrahmen, einem Drehknopf als erstem Bedienelement, einer Vielzahl von in der Zentralscheibe längs des Umfanges des Drehknopfes integrierten und durch Drehung des Drehknopfes anwählbaren Funktionssymbolen und einem Bewegungsmelder-Mikroprozessor bekannt, welcher ausgangsseitig ein Schaltglied für eine Beleuchtungseinrichtung ansteuert.

Aus der DE 10 2006 024 994 B3 ist ein in einer Unterputzdose in einer Wand einbaubarer elektronischer Schalter mit auf einem Sockel befestigter und gegenüber diesem Sockel beweglicher Betätigungswippe mit Display bekannt, wobei die Betätigungswippe über Betätigungsstifte am Sockel montierte Mikroschalter beaufschlagt. Der Gerätesockel des Schalters kann einen Busankoppler enthalten, welcher die über die Mikroschalter vorgegebenen Signale an ein Bussystem weiterleitet, um die Beleuchtung in gewünschter Weise zu schalten.

Aus der WO 97/06542 A1 ist ein in einer Wand befestigbarer Multifunktionsschalter für elektrische Geräte bekannt, bei welchem Leuchtdioden die gewählte Funktion anzeigen und welcher eine Leiterplatte mit einem Mikroprozessor beinhaltet, der von Mikrotastern kommende Signale bearbeitet und am Ausgang Signale an eine LED-Ansteuereinheit abgibt

DE-A-102006016393 offenbart ein Mulifunktions-Bediengerät nach dem Oberbegriff des Anspruchs 1.

Der Erfindung liegt die Aufgabe zugrunde, ein hinsichtlich seiner Funktionalität vereinfachtes und optimiertes Multifunktions-Bediengerät der Gebäudesystemtechnik anzugeben.

Diese Aufgabe wird erfindungsgemäß durch ein Multifunktions-Bediengerät in Form eines in eine UP-Gerätedose montierbaren Unterputz-Installationsgerätes mit Zentralscheibe, Gerätesockel und Abdeckrahmen gelöst,
- mit einem Drehknopf als erstem Bedienelement,
- mit einer Vielzahl von in die Zentralscheibe längs des Umfanges des Drehknopfes integrierten und durch Drehung des Drehknopfes anwählbaren Funktionssymbolen,
- mit einem einen Mikrotaster betätigenden Tastknopf als zweitem Bedienelement, wobei
- der Drehknopf mit einem Inkrementalgeber verbunden und über ein Wälzlager in der Zentralscheibe gelagert ist,
- jedes durch den Drehknopf anwählbares Funktionssymbol einem anzusteuernden Gerät zugeordnet ist,
- ein Mikrocontroller vorgesehen ist, welcher Inkrementalgeber-Signale des Inkrementalgebers empfängt und ein dementsprechendes Funktionssymbol-Signal an eine LED-Ansteuereinheit einer LED-Leuchtanzeige abgibt,
- ein Busankoppler vorgesehen ist, welcher mit einem Bus der Gebäudesystemtechnik verbunden ist, an dem die ansteuerbaren Geräte angeschlossen sind,
- der Mikrocontroller Aktivierungs-Signale des Mikrotasters empfängt und dementsprechend dem angewählten Gerät zuzuleitende Ansteuer-Signale an den Busankoppler abgibt.

Programme sind in vielfältiger Art mit unterschiedlichem Design, unterschiedlicher Farbgebung und unter Einsatz unterschiedlicher Materialien (z. B. Kunststoff, Edelstahl) verfügbar. Auf die vorgeschlagene Weise wird das Multifunktions-Bediengerät 1 harmonisch in ein Unterputz-Programm integriert und stellt keinen "Fremdkörper" im Hinblick auf Steckdosen, Schalter, Dimmer, Tastsensoren, EIB/KONNEX-Geräte der Hauskommunikation, Bewegungsmelder usw. dar.

Selbstverständlich ist es zur Realisierung einer Einzelgeräte-Lösung auch möglich, die Zentralscheibe 2 selbst mit einem (festen) Abdeckrahmen 4 auszurüsten.

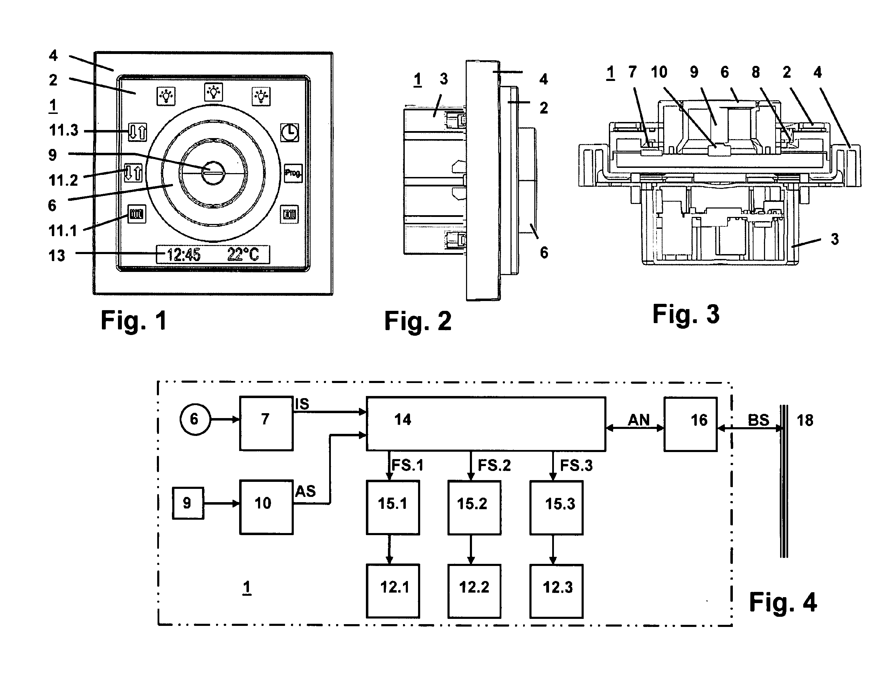

Die Zentralscheibe 2 ist mit einem zentralen Drehknopf 6 als erstem Bedienelement und einem vorzugsweise mittig im Drehknopf 6 angeordneten zentralen Tastknopf 9 als zweitem Bedienelement versehen. Längs des Umfangs des Drehknopfs 6 sind mehrere, im Ausführungsbeispiel neun Funktionssymbole 11.1, 11.2. 11.3 usw. angeordnet, welche auswechselbar sind und vom Anwender im Hinblick auf eine konkret gewünschte / vorgegebene Geräte-Ausführungsform aus einem Vorrat an Funktionssymbolen auswählbar sind. Jedem Funktionssymbol 11.1, 11.2, 11.3 usw. ist unmittelbar eine LED-Leuchtanzeige 12.1, 12.2, 12.3 usw. (siehe Figur 4) zugeordnet, welche eine Hinterleuchtung des zugeordneten Funktionssymbols 11.1, 11.2, 11.3 usw. in gewünschter Farbe, z. B. in roter/grüner/gelber/blauer Farbe ermöglicht (Aktivierung bei Anwahl des Funktionssymbols, nicht aktivierte Funktionssymbole werden nicht hinterleuchtet). Des Weiteren kann die Zentralscheibe 2 zusätzlich mit einem allgemeinen Anzeigefenster 13 versehen sein, in welchem beispielsweise die aktuelle Uhrzeit und/oder die aktuelle Temperatur des Raumes zur Anzeige gebracht werden können.

In Fig. 2 ist eine Seitenansicht eines Multifunktions-Bediengeräts dargestellt. Es sind die drei Haupt-Baukomponenten Zentralscheibe 2, Gerätesockel 3 und Abdeckrahmen 4 des Multifunktions-Bediengeräts 1 sowie der Drehknopf 6 zu erkennen.

In Fig. 3 ist ein seitlicher Schnitt durch ein Multifunktions-Bediengerät dargestellt. Von Wichtigkeit ist dabei
- dass zur Realisierung einer sehr leichtgängigen Drehbewegung des Drehknopfes 6 ein Wälzlager, beispielsweise ein Kugellager, Rollenlager oder Nadellager, in die Zentralscheibe 2 eingesetzt ist,
- dass die Drehbewegung des Drehknopfes 6 mittels eines Inkrementalgebers 7 äußerst exakt erfasst wird,
- dass durch Drücken des Tastknopfes 9 ein Mikrotaster 10 beaufschlagt wird.

Selbstverständlich können der Drehknopf 6 längs seines Umfangs und der Tastknopf 9 ebenfalls mit einer LED-Leuchtanzeige versehen sein, wodurch die Bedienbarkeit des Multifunktions-Bediengerätes erleichtert wird, insbesondere bei nicht beleuchtetem Raum.

Fig. 4 ist eine prinzipielle elektrische Schaltskizze des Multifunktions-Bediengeräts dargestellt. Es ist ein Mikrocontroller 14 (Ansteuer-/Verarbeitungsseinrichtung) zu erkennen, welcher eingangsseitig
- Inkrementalgeber-Signale IS des Inkrementalgebers 7 empfängt, wobei die Inkrementalgeber-Signale IS in Abhängigkeit der vom Anwender vorgenommenen Drehung des Drehknopfes 6 erzeugt werden,
- Aktivierungs-Signale AS des Mikrotasters 10 empfängt, wobei die Aktivierungs-Signale AS beim Drücken des Tastknopfes 9 durch den Anwender erzeugt werden.

Die Bedienung des Multifunktions-Bediengerätes erfolgt in einem ersten Schritt durch Drehen des Drehknopfes 6 in die gewünschte Position mit Aktivierung eines anzuwählenden Funktionssymbols und in einem sich anschließenden zweiten Schritt durch Drücken des Tastknopfes 9 zum auslösen einer gewünschten Funktion beim angewählten Gerät. Je nach aktueller Position des Drehknopfes 6 (durch den ersten Schritt vorgegeben) gibt der Mikrocontroller 14 ein entsprechendes Funktionssymbol-Signal FS.1, FS.2, FS.3 usw. an eine LED-Ansteuereinheit 15.1, 15.2, 15.3 usw. ab, wodurch die zugeordnete LED-Leuchtanzeige 12.1, 12.2, 12.3 usw. des Funktionssymbols aufleuchtet, so dass der Anwender eine Bestätigung hinsichtlich des angewählten Gerätes erhält und durch Drücken des Tastknopfes 9 (gemäß dem zweiten Schritt) eine gewünschte Funktion beim angewählten Gerät (beispielsweise Beleuchtung, Jalousie, Heizung) veranlassen kann, wie
- Einschalten / Ausschalten einer Beleuchtung,
- Öffnen / Schließen einer Jalousie,
- Einstellen einer gewünschten Raumtemperatur.

Je nach gewünschter Funktion wird ein Ansteuer-Signal AN vom Mikrocontroller 14 an einen Busankoppler 16 abgegeben, welcher ein entsprechendes Bus-Signal BS an einen Bus 18 der Gebäudesystemtechnik, insbesondere KNX-Bus, abgibt. Die ansteuerbaren Geräte, wie Beleuchtungen, Jalousien, Heizung usw. sind an den Bus 18 über entsprechende Aktoren angeschlossen, welche ein empfangenes Bus-Signal BS in eine entsprechende Aktion für das zugeordnete Gerät umsetzen.

Das vorgeschlagene Multifunktions-Bediengerät ist dabei freiprogrammierbar, d. h. der Anwender kann die gewünschten Geräte / Funktionen vorgeben und die dementsprechenden Funktionssymbole 11.1, 11.2, 11.3 usw. an den entsprechenden Positionen der Zentralscheibe 2 (am Umfang des Drehknopfes 6) vorsehen. Auf diese Weise können beispielsweise zwanzig unterschiedliche Funktionen mittels eines einzigen Bediengerätes vorgegeben werden. Die Funktionsanwahl / Einstellung (Anwahl des anzusteuernden Gerätes) erfolgt stets mittels des vorzugsweise kugelgelagerten Drehknopfes 6. Das Schalten / Einstellen / Auslösen der gewünschten Aktion beim angewählten Gerät erfolgt stets durch Drücken des zentralen Tastknopfes 9.

### Bezugszeichenliste

- 1: Multifunktions-Bediengerät
- 2: Zentralscheibe
- 3: Gerätesockel
- 4: Abdeckrahmen
- 5: -
- 6: Drehknopf als erstes Bedienelement
- 7: Inkrementalgeber
- 8: Wälzlager für Drehknopf
- 9: Tastknopf
- 10: Mikrotaster
- 11: Funktionssymbole 11.1, 11.2, 11.3...
- 12: LED-Leuchtanzeige 12.1, 12.2, 12.3...des Funktionssymbols
- 13: allgemeines Anzeigefenster (Anzeige von Uhrzeit, Temperatur)
- 14: Mikrocontroller
- 15: LED-Ansteuereinheit: 15.1, 15.2, 15.3...
- 16: Busankoppler
- 17: -
- 18: Bus der Gebäudesystemtechnik (KNX)

- AN: Ansteuer-Signale
- AS: Aktivierungs-Signale
- BS: Bus-Signale
- FS: Funktionssymbol-Signale: FS.1, FS.2, FS.3 ...
- IS: Inkrementalgeber-Signale

## Patentansprüche

1. Multifunktions-Bediengerät (1) in Form eines in eine UP-Gerätedose montierbaren Unterputz-Installationsgerätes mit Zentralscheibe (2), Gerätesockel (3) und Abdeckrahmen (4),
• mit einem Drehknopf (6) als erstem Bedienelement,
• mit einer Vielzahl von in die Zentralscheibe (2) längs des Umfanges des Drehknopfes integrierten und durch Drehung des Drehknopfes (6) anwählbaren Funktionssymbolen (11.1, 11.2, 11.3...),
• mit einem einen Mikrotaster (10) betätigenden Tastknopf (9) als zweitem Bedienelement,
**dadurch gekennzeichnet, dass**
• der Drehknopf (6) mit einem Inkrementalgeber (7) verbunden und über ein Wälzlager (8) in der Zentralscheibe (2) gelagert ist,
• jedes durch den Drehknopf anwählbare Funktionssymbol einem anzusteuernden Gerät zugeordnet ist,
• ein Mikrocontroller (14) vorgesehen ist, welcher Inkrementalgeber-Signale (IS) des Inkrementalgebers (7) empfängt und ein dementsprechendes Funktionssymbol-Signal (FS.1, FS.2, FS.3...) an eine LED-Ansteuereinheit (15.1, 15.2, 15.3...) einer LED-Leuchtanzeige (12.1, 12.2, 12.3...) abgibt,
• ein Busankoppler (16) vorgesehen ist, welcher mit einem Bus (18) der Gebäudesystemtechnik verbunden ist, an dem die ansteuerbaren Geräte angeschlossen sind,
• der Mikrocontroller (14) Aktivierungs-Signale (AS) des Mikrotasters (10) empfängt und dementsprechend dem angewählten Gerät zuzuleitende Ansteuer-Signale (AN) an den Busankoppler (16) abgibt.

2. Multifunktions-Bediengerät (1) nach Anspruch 1, **dadurch gekennzeichnet, dass** der Mikrotaster (10) zentral im Drehknopf (6) angeordnet ist.

3. Multifunktions-Bediengerät (1) nach Anspruch 1 oder 2, **dadurch gekennzeichnet, dass** in der Zentralscheibe (2) ein allgemeines Anzeigefenster (13) zusätzlich integriert ist.

## Claims

1. Multifunctional operating device (1) in the form of a flush-mounted installation device with a central plate (2), device socket (3) and cover frame (4),
• having a rotary knob (6) as a first operating element,
• having a multiplicity of function symbols (11.1, 11.2, 11.3 etc.) which are integrated in the central plate (2) along the circumference of the rotary knob and can be selected by turning the rotary knob (6),
• having a pushbutton knob (9), as a second operating element, which activates a microbutton (10),
**characterized in that**
• the rotary knob (6) is connected to an incremental signal generator (7) and is mounted in the central plate (2) by means of a rotary bearing (8),
• each function symbol which can be selected by means of the rotary knob is assigned to a device which is to be actuated,
• a microcontroller (14) is provided which receives incremental signal generator signals (IS) of the incremental signal generator (7) and outputs a corresponding function symbol signal (FS.1, FS.2, FS.3 etc.) to an LED actuation unit (15.1, 15.2, 15.3 etc.) of an LED display (12.1, 12.2, 12.3 etc.),
• a bus connector (16) is provided which is connected to a bus (18) of the building system equipment to which the devices which can be actuated are connected,
• the microcontroller (14) receives actuation signals (AS) of the microbutton (10) and correspondingly outputs to the bus connector (16) actuation signals (AN) which are to be fed to the selected device.

2. Multifunctional operating device (1) according to Claim 1, **characterized in that** the microbutton (10) is arranged centrally in the rotary knob (6).

3. Multifunctional operating device (1) according to Claim 1 or 2, **characterized in that** a general display window (13) is additionally integrated into the central plate (2).

## Revendications

1. Appareil de commande multifonctions (1) sous forme d'un appareil à installation encastrable montable dans une prise d'appareil encastrable comportant un disque central (2), un socle d'appareil (3) et un cadre de finition (4),
• comportant un bouton tournant (6) comme premier élément de commande,
• comportant une pluralité de symboles de fonction (11.1, 11.2, 11.3,...) intégrés dans le disque central (2) le long de la circonférence du bouton tournant et pouvant être sélectionnés par la rotation du bouton tournant (6),
• comportant une touche (9) actionnant un micro bouton poussoir (10) comme deuxième élément de commande,
**caractérisé en ce que**
• le bouton tournant (6) est relié à un codeur incrémentiel (7) et est positionné par l'intermédiaire d'un roulement (8) dans le disque central (2),
• chaque symbole de fonction pouvant être sélectionné par le bouton tournant est coordonné à un appareil à commander,
• un microcontrôleur (14) est prévu, qui reçoit des signaux de codeur incrémentiel (IS) du codeur incrémentiel (7) et émet un signal de symbole de fonction correspondant (FS.1, FS.2, FS.3,...) sur une unité de commande à LED (15.1, 15.2, 15.3,...) d'un affichage lumineux à LED (12.1, 12.2, 12.3...),
• un dispositif de couplage au bus (16) est prévu, qui est relié à un bus (18) du système domotique, auquel sont raccordés les appareils à commander,
• le microcontrôleur (14) reçoit des signaux d'activation (AS) du micro bouton poussoir (10) et émet de manière correspondante les signaux de commande (AN) menant à l'appareil sélectionné vers le dispositif de couplage de bus (16).

2. Appareil de commande multifonctions (1) selon la revendication 1, **caractérisé en ce que** le micro bouton poussoir (10) est disposé centralement dans le bouton tournant (6).

3. Appareil de commande multifonctions (1) selon la revendication 1 ou 2, **caractérisé en ce que** dans le disque central (2) une fenêtre d'affichage générale (13) est en outre intégrée.
